# EUROPEAN PATENT APPLICATION

(11) **EP 4 645 063 A1**
(43) Date of publication of application: **05.11.2025**
(21) Application number: 24753472.0
(22) Date of filing: 03.01.2024
(51) Int. Cl.: G06F 3/16, G06F 3/04842, G06F 3/0481, H04R 1/02

(54) **ELECTRONIC DEVICE FOR DISPLAYING IMAGE, AND OPERATING METHOD THEREOF**

(30) Priority: 06.02.2023 KR 20230015674
(71) Applicant: Samsung Electronics Co., Ltd., Suwon-si, Gyeonggi-do 16677 (KR)
(72) Inventor: DO, Heunglok, Suwon-si, Gyeonggi-do 16677 (KR)
(74) Representative: Walaski, Jan Filip
(86) International application number: PCT/KR2024/000094
(87) International publication number: WO 2024/167140

(57) **Abstract**

Disclosed is an operating method of an electronic device. An operating method of an electronic device, according to an embodiment of the present disclosure, may comprise the operations of: obtaining content data; displaying an audio system list comprising at least one audio system that is usable for the content data; identifying an audio system from the at least one audio system; obtaining information about a plurality of audio output devices included in the audio system; obtaining PCM data of the plurality of audio output devices by decoding the content data on the basis of the information about the plurality of audio output devices; generating output information of the plurality of audio output devices, for the content data, on the basis of the PCM data of the plurality of audio output devices; generating sound visualization data for the content data on the basis of the information about the plurality of audio output devices and the output information of the plurality of audio output devices; and displaying a screen on the basis of the content data and the sound visualization data. Various other embodiments identified by the specification are possible.

## Description

### [Technical Field]

Embodiments of the disclosure relate to an electronic device for displaying an image and a method for operating the same.

### [Background Art]

With the development of sound technology, stereoscopic sound services such as surround audio or object-based audio may be provided based on various sound output devices. In order to provide a stereoscopic sound service, a vivid sound effect may be provided to the user by outputting sound together through a sound bar as well as a speaker included in a display device (e.g., a TV). Furthermore, with the diversification of sound systems that may be provided, such as 5.1.2 channels and 7.1.4 channels, 2 channels and 5.1 channels, the types, numbers, and positions of sound output devices in the user's audio environment are also diversifying.

### [Disclosure of Invention]

### [Solution to Problems]

The sound system that users may select varies based on the content and audio environment. However, it may be challenging for the users to understand the sound system's functionality or predict its features until they purchase and use the sound output device. Furthermore, even with the purchase and use of a sound output device, the users may find it challenging to clearly understand the operating status of multiple sound output devices, as they experience stereophonic sound solely through hearing.

Embodiments of the disclosure provide a device for visually providing a sound output form of a sound system that may be provided by a display device and a method for operating the same.

There may also be provided a device for providing a list of sound systems available to the user and selecting a sound system desired by the user and a method for operating the same.

There may also be provided a device for selecting a sound system desired by a user according to the user's audio environment and visually displaying a sound setting therefor, and a method for operating the same.

A method for operating an electronic device according to an example embodiment of the disclosure may comprise obtaining content data. In an example embodiment, the operation method of the electronic device may comprise displaying a sound system list including at least one sound system available for the content data. In an example embodiment, the operation method of the electronic device may comprise identifying a first sound system from the at least one sound system. In an example embodiment, the operation method of the electronic device may comprise obtaining information about a plurality of sound output devices included in the first sound system. In an example embodiment, the operation method of the electronic device may comprise obtaining pulse code modulation (PCM) data of the plurality of sound output devices by decoding the content data based on the information about the plurality of sound output devices. In an example embodiment, the operation method of the electronic device may comprise generating output information about the plurality of sound output devices for the content data based on the PCM data of the plurality of sound output devices. In an example embodiment, the operation method of the electronic device may comprise generating sound visualization data for the content data based on output information about the plurality of sound output devices and the information about the plurality of sound output devices. In an example embodiment, the operation method of the electronic device may comprise displaying a screen based on the content data and the sound visualization data. In an example embodiment, the information about the plurality of sound output devices may include information about positions of the plurality of sound output devices, information about shapes of the plurality of sound output devices, and information about performances of the plurality of sound output devices. In an example embodiment, the output information about the plurality of sound output devices may include information about output intensities and information about output frequency bands of the plurality of sound output devices.

In an example embodiment, the displayed screen may include a first area where a first image which may be an image corresponding to the content data may be displayed and a second area where a second image which may be an image corresponding to the sound visualization data may be displayed.

In an example embodiment, the operation method of the electronic device may comprise generating a plurality of objects representing the plurality of sound output devices based on the information about the shapes of the plurality of sound output devices. In an example embodiment, the operation method of the electronic device may comprise identifying positions where the plurality of objects representing the plurality of sound output devices are displayed based on the information about the positions of the plurality of sound output devices. In an example embodiment, the operation method of the electronic device may comprise displaying the plurality of objects representing the plurality of sound output devices to correspond to positions where the plurality of objects are displayed.

In an example embodiment, the operation method of the electronic device may comprise obtaining information about a user's sound setting history. In an example embodiment, the operation method of the electronic device may comprise determining a priority of the at least one sound system based on the information about the user's sound setting history. In an example embodiment, the operation method of the electronic device may comprise displaying the sound system list according to the determined priority. In an example embodiment, the information about the user's sound setting history may include information about a sound output device having a history of connecting to the electronic device a predetermined number of times or more, information about the user's preferred channel, or information about the user's preferred sound output device.

In an example embodiment, the operation method of the electronic device may comprise identifying a first user input selecting the first sound system from among the at least one sound system. In an example embodiment, the operation method of the electronic device may comprise displaying a user interface (UI) representing the plurality of sound output devices included in the first sound system in response to identifying the first user input. In an example embodiment, the operation method of the electronic device may comprise identifying a second user input selecting one or more sound output devices from among the plurality of sound output devices through the UI. In an example embodiment, the operation method of the electronic device may comprise obtaining output information about the plurality of sound output devices in response to identifying the second user input.

In an example embodiment, the operation method of the electronic device may comprise displaying the first image in response to obtaining the content data. In an example embodiment, the operation method of the electronic device may comprise identifying a user input for displaying sound visualization information while displaying the first image. In an example embodiment, the operation method of the electronic device may comprise displaying the sound system list in response to identifying the user input for displaying the sound visualization information.

In an example embodiment, the operation method of the electronic device may comprise displaying information about a sound state according to a playback interval of the content data.

In an example embodiment, the information about the sound state according to the playback interval of the content data may include information about an output intensity of each of the plurality of sound output devices for each playback interval.

In an example embodiment, the operation method of the electronic device may comprise obtaining virtual space information including information about a space adjacent to the electronic device. In an example embodiment, the operation method of the electronic device may comprise generating the sound visualization data based on the virtual space information.

In an example embodiment, the operation method of the electronic device may comprise obtaining echo information about the electronic device based on the virtual space information. In an example embodiment, the operation method of the electronic device may comprise generating the sound visualization data based on the echo information.

In an example embodiment, the sound visualization data may include an object indicating an output direction, and an object indicating an output intensity of a sound output from the plurality of sound output devices.

An electronic device according to an example embodiment of the disclosure may comprise memory, and at least one processor connected to the memory. In an example embodiment, the at least one processor may obtain content data. In an example embodiment, the at least one processor may display a sound system list including at least one sound system available for the content data. In an example embodiment, the at least one processor may identify a first sound system from the at least one sound system. In an example embodiment, the at least one processor may obtain information about a plurality of sound output devices included in the first sound system. In an example embodiment, the at least one processor may obtain pulse code modulation PCM data of the plurality of sound output devices by decoding the content data based on the information about the plurality of sound output devices. In an example embodiment, the at least one processor may generate output information about the plurality of sound output devices for the content data based on the PCM data of the plurality of sound output devices. In an example embodiment, the at least one processor may generate sound visualization data for the content data based on output information about the plurality of sound output devices and the information about the plurality of sound output devices. In an example embodiment, the at least one processor may display a screen based on the content data and the sound visualization data. In an example embodiment, the information about the plurality of sound output devices may include information about positions of the plurality of sound output devices, information about shapes of the plurality of sound output devices, and information about performances of the plurality of sound output devices. In an example embodiment, the output information about the plurality of sound output devices may include information about output intensities and information about output frequency bands of the plurality of sound output devices.

In an example embodiment, the displayed screen may include a first area where a first image which may be an image corresponding to the content data may be displayed and a second area where a second image which may be an image corresponding to the sound visualization data may be displayed.

In an example embodiment, the at least one processor may generate a plurality of objects representing the plurality of sound output devices based on the information about the shapes of the plurality of sound output devices. In an example embodiment, the at least one processor may identify positions where the plurality of objects representing the plurality of sound output devices are displayed based on the information about the positions of the plurality of sound output devices. In an example embodiment, the at least one processor may display the plurality of objects representing the plurality of sound output devices to correspond to positions where the plurality of objects are displayed.

In an example embodiment, the at least one processor may obtain information about a user's sound setting history. In an example embodiment, the at least one processor may determine a priority of the at least one sound system based on the information about the user's sound setting history. In an example embodiment, the at least one processor may display the sound system list according to the determined priority. In an example embodiment, the information about the user's sound setting history may include information about a sound output device having a history of connecting to the electronic device a predetermined number of times or more, information about the user's preferred channel, or information about the user's preferred sound output device.

In an example embodiment, the at least one processor may identify a first user input selecting the first sound system from among the at least one sound system. In an example embodiment, the at least one processor may display a user interface (UI) representing the plurality of sound output devices included in the first sound system in response to identifying the first user input. In an example embodiment, the at least one processor may identify a second user input selecting one or more sound output devices from among the plurality of sound output devices through the UI. In an example embodiment, the at least one processor may obtain output information about the plurality of sound output devices in response to identifying the second user input.

In an example embodiment, the at least one processor may display the first image in response to obtaining the content data. In an example embodiment, the at least one processor may identify a user input for displaying sound visualization information while displaying the first image. In an example embodiment, the at least one processor may display the sound system list in response to identifying the user input for displaying the sound visualization information.

In an example embodiment, the at least one processor may display information about a sound state according to a playback interval of the content data.

In an example embodiment, the information about the sound state according to the playback interval of the content data may include information about an output intensity of each of the plurality of sound output devices for each playback interval.

In an example embodiment, the at least one processor may obtain virtual space information including information about a space adjacent to the electronic device. In an example embodiment, the at least one processor may generate the sound visualization data based on the virtual space information.

According to the examples of the disclosure, an effect of visually providing a sound output aspect of an electronic device is provided.

Further, a sound system is adaptively selected according to the user's audio environment and the resulting sound effect is displayed together with the content, enhancing the user experience.

Effects obtainable from the disclosure are not limited to the above-mentioned effects, and other effects not mentioned may be apparent to one of ordinary skill in the art from the following description.

### [Brief Description of Drawings]

FIG. 1 is a block diagram illustrating a configuration of an electronic device according to an example embodiment;
FIG. 2 illustrates an example of an audio environment of an electronic device according to an example embodiment;
FIG. 3 illustrates an operation flow of an electronic device according to an example embodiment;
FIG. 4 illustrates an example of a screen displayed on an electronic device according to an example embodiment;
FIG. 5 illustrates an example of a user interface of an electronic device according to an embodiment;
FIG. 6 illustrates an example of a screen displayed on an electronic device according to an example embodiment;
FIG. 7 illustrates an example of a screen displayed on an electronic device according to an example embodiment; and
FIG. 8 illustrates an example of a screen proposing a layout structure of sound output devices by an electronic device according to an example embodiment.

In connection with the description of the drawings, the same or similar reference numerals may be used to denote the same or similar elements.

### [Mode for the Invention]

Hereinafter, embodiments of the disclosure are described in detail with reference to the drawings so that those skilled in the art to which the disclosure pertains may easily practice the disclosure. However, the disclosure may be implemented in other various forms and is not limited to the embodiments set forth herein. The same or similar reference denotations may be used to refer to the same or similar elements throughout the specification and the drawings. Further, for clarity and brevity, no description is made of well-known functions and configurations in the drawings and relevant descriptions.

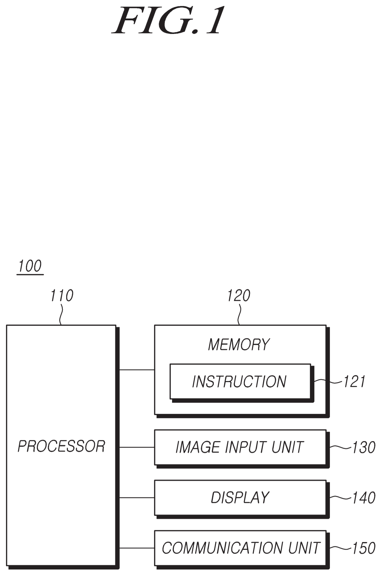

FIG. 1 is a block diagram illustrating an electronic device according to an embodiment. The electronic device 100 may be wearable terminals, such as watches and glasses, capable of performing various computing functions, such as video watching and communication. The electronic device 100 may be various types of terminals without being limited to the above examples.

According to an embodiment, the memory 120 is a storage medium used by the electronic device 100 and may store data, such as at least one instruction 121 or configuration information corresponding to at least one program. The program may include an operating system (OS) program and various application programs.

In an embodiment, the storage unit 120 may include at least one type of storage medium of flash memory types, hard disk types, multimedia card micro types, card types of memories (e.g., SD or XD memory cards), random access memories (RAMs), static random access memories (SRAMs), read-only memories (ROMs), electrically erasable programmable read-only memories (EEPROMs), programmable read-only memories (PROMs), magnetic memories, magnetic disks, or optical discs.

According to an embodiment, the memory 120 may store content data. The content data may mean data on content to be reproduced in the electronic device 100. For example, the content data may include data on broadcast programs received from broadcasters, movies received from content provision servers, streaming data on dramas, and game data.

In an embodiment, the memory 120 may include information about a list of sound systems applicable to the electronic device 100.

In an embodiment, the memory 120 may store information about a sound output device that may be connected to the electronic device 100. For example, the memory 120 may include information about the appearance of the sound output device, information about performance, channel information, or the like.

In an embodiment, the memory 120 may store an image obtained through a camera unit (not illustrated) and information about an adjacent space of the electronic device obtained through a sensor unit (not illustrated).

According to an embodiment, the memory 120 may store information about a sound system setting history of the electronic device.

According to an embodiment, the image input unit 130 may receive images and image information through a tuner (not shown), an input/output unit (not shown), or the communication unit 150. The image input unit 130 may include at least one of the tuner and the input/output unit. The tuner may tune and select only the frequency of the broadcast channel to be received by the electronic device 100 among many radio components, by amplifying, mixing, and resonating the broadcast signals wiredly/wirelessly received. The broadcast signal may include video, audio, and additional data (e.g., electronic program guide (EPG)). The tuner may receive real-time broadcast channels (or real-time viewing images) from various broadcast sources, such as terrestrial broadcasts, cable broadcasts, satellite broadcasts, Internet broadcasts, and the like. The tuner may be implemented integrally with the electronic device 100 or may be implemented as a separate tuner electrically connected to the electronic device 100. The input/output unit may include at least one of a high definition multimedia interface (HDMI) input port, a component input jack, a PC input port, and a USB input jack capable of receiving an image and image information from an external device of the electronic device 100 under the control of the processor 110. It is obvious to one of ordinary skill in the art that the input/output unit may be added, deleted, and/or changed according to the performance and structure of the electronic device 100.

According to an embodiment, the display 140 may perform functions for outputting information in the form of numbers, characters, images, and/or graphics. The display 140 may include at least one hardware module for output. The at least one hardware module may include at least one of, e.g., a liquid crystal display (LCD), a light emitting diode (LED), a light emitting polymer display (LPD), an organic light emitting diode (OLED), an active matrix organic light emitting diode (AMOLED), or flexible LED (FLED). The display 140 may display a screen corresponding to data received from the processor 110. The display 140 may be referred to as an 'output unit', a 'display unit', or by other terms having an equivalent technical meaning.

According to an embodiment, the communication unit 150 may provide a wired/wireless communication interface enabling communication with an external device. The communication unit 150 may include at least one of communication circuitry, transceiver, transmitter, or receiver. The communication unit 150 may include at least one of a wired Ethernet, a wireless LAN communication unit, and a short-range communication unit. The wireless LAN communication unit may include, e.g., Wi-Fi, and may support the wireless LAN standard (IEEE802.11x) of the institute of electrical and electronics engineers (IEEE). The wireless LAN communication unit may be wirelessly connected to an access point (AP) under the control of the processor 110. The short-range communication unit may perform short-range communication wirelessly with an external device under the control of the processor 110. Short-range communication may include Bluetooth, Bluetooth low energy, infrared data association (IrDA), ultra-wideband (UWB), and near-field communication (NFC). The external device may include a server device and a mobile terminal (e.g., phone, tablet, etc.) providing, e.g., a video service.

According to an embodiment, the processor 110 may control at least one other component of the electronic device 100 and/or execute computation or data processing regarding communication by executing at least one instruction 121 stored in the memory 120. The processor 110 may include at least one of a central processing unit (CPU), a graphic processing unit (GPU), a micro controller unit (MCU), a sensor hub, a supplementary processor, a communication processor, an application processor, an application specific integrated circuit (ASIC), or field programmable gate arrays (FPGA) and may have multiple cores.

In an embodiment, the processor 110 may execute, e.g., software to control at least one other component (e.g., a hardware or software component) of the electronic device 100 connected with the processor 110 and may process or compute various data. According to one embodiment, as at least part of the data processing or computation, the processor 110 may store instructions or data received from another component onto a volatile memory, process the instructions or the data stored in the volatile memory, and store resulting data in a non-volatile memory. According to an embodiment, the processor 110 may include a main processor (e.g., a central processing unit (CPU) or an application processor (AP)), or an auxiliary processor (e.g., a graphics processing unit (GPU), a neural processing unit (NPU), an image signal processor (ISP), a sensor hub processor, or a communication processor (CP)) that is operable independently from, or in conjunction with, the main processor. For example, when the electronic device 100 includes the main processor and the auxiliary processor, the auxiliary processor may be configured to use lower power than the main processor or to be specified for a designated function. The auxiliary processor may be implemented separately from, or as part of, the main processor.

In an embodiment, the auxiliary processor may control at least some of functions or states related to at least one component of the electronic device 100, instead of the main processor while the main processor is in an inactive (e.g., sleep) state or along with the main processor while the main processor is an active state (e.g., executing an application). According to an embodiment, the auxiliary processor (e.g., the neural processing unit) may include a hardware structure specified for artificial intelligence model processing. The artificial intelligence model may be generated via machine learning. Such learning may be performed, e.g., by the electronic device 100 where the artificial intelligence model is performed or via a separate server. Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

In an embodiment, although not illustrated in the drawings, the electronic device 100 may include a camera unit (not illustrated) and a sensor unit (not illustrated).

The camera unit (not illustrated) according to an embodiment may include an image sensor such as a lens, a charged coupled device (CCD), a complementary metal oxide semiconductor (CMOS), and an analog-to-digital converter.

The camera unit (not illustrated) according to an embodiment may capture a space adjacent to the electronic device 100. The camera unit (not illustrated) may obtain a captured image by capturing a peripheral space of the electronic device. The camera unit (not illustrated) may convert the obtained image into a digital signal and transmit the digital signal to the processor 110. The processor 110 described below may process the image converted into the digital signal.

In an embodiment, the camera unit (not illustrated) is not a component included in the electronic device 100, but may include an external electronic device (e.g., an external cam, an external camera, another external electronic device including a camera, etc.) that is present separately from the electronic device 100 and is connected to the electronic device 100.

The sensor unit (not illustrated) according to an embodiment may include at least one sensor for performing a function of identifying a subject positioned adjacent to the electronic device 100. For example, the sensor unit (not illustrated) may include at least one of a motion sensor, a radio frequency (RF) sensor, an ultra-wideband (UWB) sensor, and an ultrasonic sensor.

The sensor unit (not illustrated) according to an embodiment may obtain information related to the position of at least one object (e.g., an external sound output device) positioned adjacent to the electronic device 100 and information about an adjacent space of the electronic device 100. For example, the sensor unit (not illustrated) may obtain information about the position of an object positioned adjacent to the electronic device 100. For example, the sensor unit (not illustrated) may obtain information about a space adjacent to the electronic device 100 (e.g., the position of a wall, the position of a ceiling, the position of a floor, etc.). The sensor unit (not illustrated) may transmit the obtained information related to the position of the subject to the processor 110. The processor 110 to be described below may process information about the space adjacent to the received electronic device.

In an embodiment, the processor 110 may obtain content data from the memory 120, the image input unit 130, or the communication unit 150. For example, when the content data is pre-stored image data, the processor 110 may obtain content data from the memory 120. For example, when content data is video data (e.g., streaming data) received in real-time, the processor 110 may obtain content data based on data received from image input unit 130 or communication unit 150.

In an embodiment, the processor 110 may display a list of sound systems including at least one available sound system for the content data.

In an embodiment, the processor 110 may identify the sound system from at least one sound system.

In an embodiment, the processor 110 may include information about a plurality of sound output devices included in the sound system.

In an embodiment, the processor 110 may decode content data based on information about a plurality of sound output devices to obtain pulse code modulation (PCM) data of the plurality of sound output devices.

In an embodiment, the processor 110 may generate output information about a plurality of sound output devices related to content data based on PCM data of the plurality of sound output devices.

In an embodiment, the processor 110 may generate sound visualization data for content data based on information about the plurality of sound output devices and output information about the plurality of sound output devices.

In an embodiment, the processor 110 may display a screen based on content data and sound visualization data.

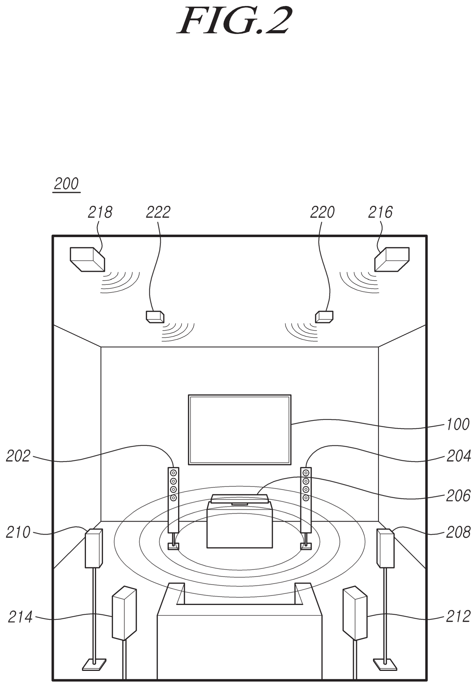

FIG. 2 illustrates an example of an audio environment 200 of an electronic device according to an embodiment. The audio environment 200 illustrated in FIG. 2 is merely an example, and embodiments of the disclosure may be applied to an audio environment having different types, numbers, or positions of sound output devices than those included in the audio environment 200.

According to an embodiment, the audio environment 200 may include various types of sound output devices (e.g., 202, 204, 206, 208, 210, 212, 214, 216, 218, 220, 222) as well as an internal speaker (not illustrated) of the electronic device 100.

In an embodiment, the audio environment 200 may include a sound output device 206 disposed at a front center of the electronic device 100.

In an embodiment, the audio environment 200 may include a sound output device 202 disposed on the front left side of the electronic device 100 and a sound output device 204 disposed on the front right side. In the following description, left, right, front, and rear are described with respect to the direction in which the electronic device 100 is viewed.

In an embodiment, the audio environment 200 may include a surround sound output device 210 disposed on one side (left surround) of the space in which the electronic device 100 is included and a surround sound output device 208 disposed on the right side (right surround) of the space.

In an embodiment, the audio environment 200 may include sound output devices 212 and 214 disposed behind the space in which the electronic device 100 is included.

In an embodiment, the audio environment 200 may include sound output devices 216, 218, 220, and 222 disposed above (e.g., on the ceiling) the space in which the electronic device 100 is included.

In an embodiment, although not illustrated in the drawings, the audio environment 200 may include at least one speaker (not illustrated) disposed inside the electronic device 100.

In an embodiment, the electronic device 100 may output sound through sound output devices included in the audio environment 200.

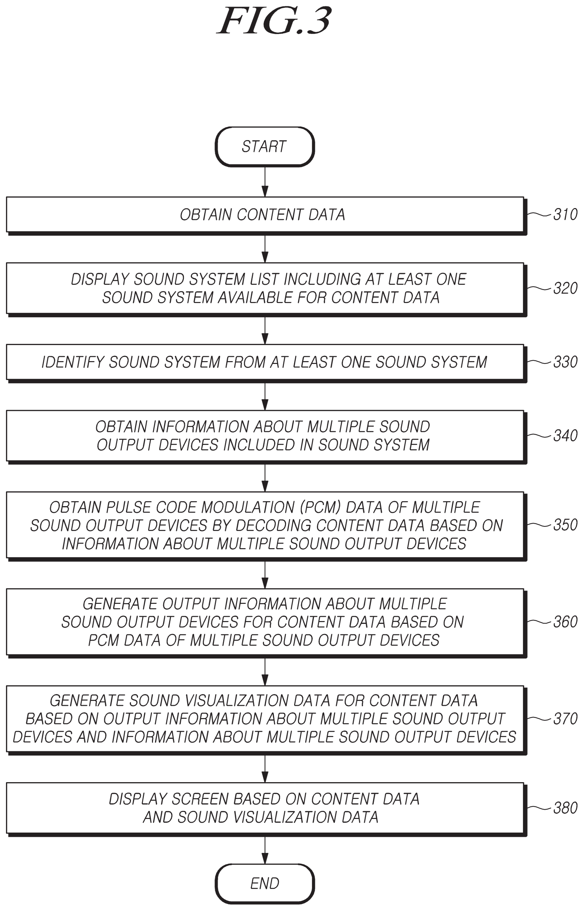

FIG. 3 illustrates an operation flow of an electronic device 100, according to an embodiment. The electronic device illustrated in FIG. 3 may include the electronic device 100 of FIGS. 1 and 2. The sound output device described in connection with FIG. 3 may include the sound output devices 202, 204, 206, 208, 210, 212, 214, 216, 218, 220, and 222 of FIG. 2.

According to an embodiment, in operation 310, the electronic device may obtain content data. The content data may mean data on content to be displayed by the electronic device.

In an embodiment, the electronic device may obtain content data from memory, a communication unit, or an image input unit. For example, the electronic device may obtain image data stored in the memory. For example, the electronic device may obtain real-time image data from the communication unit or the image input unit.

According to an embodiment, in operation 320, the electronic device may display a sound system list including at least one available sound system for the content data.

In an embodiment, the electronic device may identify at least one sound system available for the content data. For example, if the content data is content data that supports only two sound output devices (e.g., 2ch), the electronic device may obtain information about the sound system constituted of two sound output devices from the memory or communication unit of the electronic device. For example, if the content data is content data that supports 5.1 channels, the electronic device may obtain information about the sound system constituted of sound output devices that make up 5.1 channels from the electronic device's memory or communication unit.

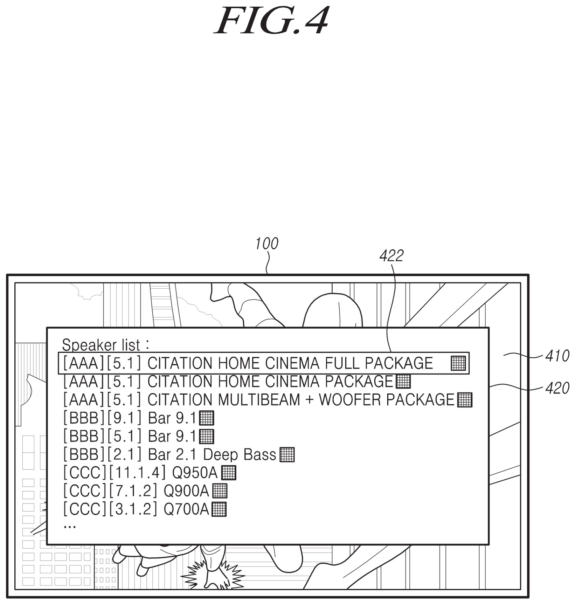

In an embodiment, the sound system list may include at least one sound system. Referring to FIG. 4, while the content image 410 is displayed on the electronic device 100, an sound system list 420 including available sound systems for the content image 410 may be displayed. Items in the sound system list represent each sound system, and may include information about the manufacturing company (e.g., AAA, BBB, CCC) of the sound output device constituting the sound system, and/or information (e.g., home cinema, multibeam+woofer) about the channel information (e.g., 2ch, 5.1 channel, 5.1.2 channel, 7.1.4 channel, etc.) features.

In an embodiment, when the electronic device receives a user input to display a sound list (e.g., an input for a sound visualization request through a remote control, etc.) while displaying the first image displayed based on the obtained content data, the electronic device may display the sound system list. In other words, the sound system list may be displayed when a user input requesting display of the sound system list is identified while displaying the first image.

According to an embodiment, in operation 330, the electronic device may identify the sound system from at least one sound system. The electronic device may identify a sound system to be used for sound output of content data among at least one sound system displayed in the sound system list.

In an embodiment, the electronic device may identify a first user input for selecting the sound system from among at least one sound system. The electronic device may identify a user input for selecting any one sound system from at least one sound system included in the sound system list. For example, referring to FIG. 4, a user input to use a 5.1-channel sound system constituted of sound output devices manufactured by "AAA" may be identified in the sound system list 410.

In an embodiment, although not illustrated in the drawings, the electronic device may display the sound system list when identifying a user input for displaying sound visualization data while displaying a first image representing a content image displayed based on the content data.

In an embodiment, the electronic device may display at least one sound system available for content data according to priority. For example, if there is a sound setting preconfigured by the user, the electronic device may display the sound system included in the preconfigured sound setting in preference to other sound systems. For example, when the electronic device receives information about a recommended sound system for content data from the communication unit, the recommended sound system may be displayed in preference to other sound systems. In other words, the server that the electronic device communicates with for content playback may create a database for various types of sound output devices and sound systems and, based on this, determine the sound system to recommend to the user. The electronic device may receive the recommended sound system from the server and display the sound system list based thereon.

In an embodiment, the electronic device may display the sound system list based on the sound setting history of the electronic device. For example, the electronic device may display a sound system including the currently connected sound output device in preference to other sound systems. For example, the electronic device may display a sound system including a sound output device that has been connected to the electronic device in preference to other sound systems. The electronic device may identify a sound output device, which is currently or was previously connected to the electronic device, through consumer electronics control (CEC) communication. The electronic device may display a sound system that includes a sound output device of the same brand, a new product, or a product with higher specifications in preference to other sound systems. For example, the electronic device may receive information about user-preferred sound output devices through a user input and display the sound system including preferred sound output devices in preference to other sound systems. For example, the electronic device may receive user-preferred sound channel information and display the sound system that supports the sound channel in preference to other sound systems.

In an embodiment, the electronic device may display a quick response (QR) code for a sound output device included in the corresponding sound system list together with the sound system list.

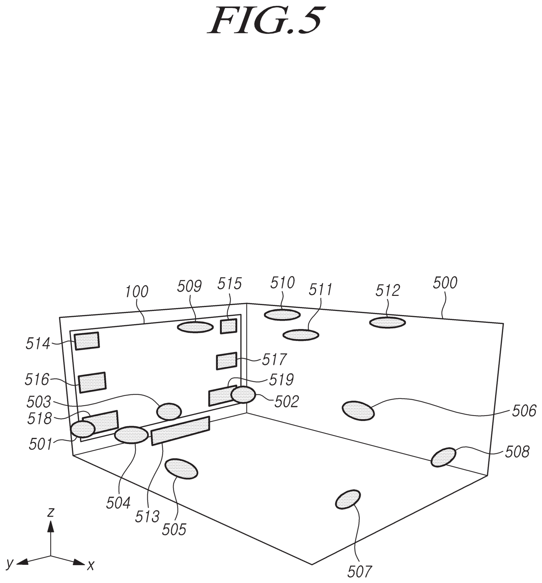

In an embodiment, although not illustrated in the drawings, the electronic device may display a user interface representing the configuration of the identified sound system when identifying the sound system. In response to identifying a first user input, the electronic device may display the user interface (UI) 500 representing the plurality of sound output devices included in the sound system. Referring to FIG. 5, the electronic device may display the user interface 500 representing the configuration of the sound system identified by the electronic device.

In an embodiment, the user interface 500 may include an object (e.g., the electronic device 100) representing the electronic device, and objects representing a plurality of sound output devices that may be connected with the electronic device to be used (e.g., an object 501 (left) representing a sound output device (left), an object 502 (right) representing a sound output device, an object 503 (center) representing a sound output device (center), an object 504 (low frequency effect, woofer) representing a sound output device, an object 505 (left surround) representing a sound output device, an object 506 (right surround) representing a sound output device, an object 507 (left rear surround) representing a sound output device, an object 508 (right rear surround) representing a sound output device, an object 509 (left top front) (placed on the ceiling) representing a sound output device, an object 510 (right top front) representing a sound output device, an object 511 (left top rear) representing a sound output device, an object 512 (right top rear) representing a sound output device, and an object 513 (sound bar) representing a sound output device. Further, the user interface 500 may include an object representing an object (e.g., 514, 515, 516, 517, 518, and 519) representing a speaker included in the electronic device.

The user interface 500 illustrated in FIG. 5 is merely an example, and the positions and number of objects representing the sound output devices displayed on the user interface 500 may vary according to the sound system selected by the first user input. For example, when the sound system corresponding to 2ch is identified in the sound system list through the first user input, the user interface 500 may include an object 501 and an object 502. For example, when the sound system corresponding to 2.1ch is identified in the sound system list through the first user input, the user interface 500 may include an object 501, an object 502, and an object 504. For example, when the sound system corresponding to 5.1ch is identified in the sound system list through the first user input, the user interface 500 may include an object 501, an object 502, an object 503, an object 504, an object 505, and an object 506. For example, when the sound system corresponding to 7.1ch is identified in the sound system list through the first user input, the user interface 500 may include an object 501, an object 502, an object 503, an object 504, an object 505, an object 506, an object 507, and an object 508. For example, if the sound system corresponding to 5.1.2ch is identified in the sound system list through the first user input, the user interface 500 may include an object 501, an object 502, an object 503, an object 504, an object 505, an object 506, an object 511, and an object 512. For example, if the sound system corresponding to 5.1.4ch is identified in the sound system list through the first user input, the user interface 500 may include an object 501, an object 502, an object 503, an object 504, an object 505, an object 506, an object 509, an object 510, an object 511, and an object 512. For example, if the sound system corresponding to 7.1.2ch is identified in the sound system list through the first user input, the user interface 500 may include an object 501, an object 502, an object 503, an object 504, an object 505, an object 506, an object 507, an object 508, an object 511, and an object 512. For example, when the sound system corresponding to 7.1.4ch is identified in the sound system list through the first user input, the user interface 500 may include an object 501, an object 502, an object 503, an object 504, an object 505, an object 506, an object 507, an object 508, an object 510, an object 511, and an object 512.

In an embodiment, the electronic device may identify a second user input for selecting (501 to 508, 513 to 519) one or more sound output devices from among the plurality of sound output devices (e.g., the objects 501 to 519 representing the sound output device) through the UI 500.

In an embodiment, the electronic device may determine a sound system to be used based on a sound output device corresponding to an object selected or not selected from the second user input, and may generate sound visualization data to be used together for display of the content data.

In an embodiment, the electronic device may determine to use the sound output device corresponding to the object selected by the second user input. In this case, the electronic device may configure the sound system with other sound output devices other than the sound output device corresponding to the selected object. Accordingly, the electronic device may generate sound visualization data related to the sound output device corresponding to the selected object.

In an embodiment, the electronic device may determine not to use the object selected by the second user input. In this case, the electronic device may constitute the remaining sound output devices except for the sound output device corresponding to the selected object. Accordingly, the electronic device may generate sound visualization data for the remaining sound output devices except for the sound output device corresponding to the selected object.

In an embodiment, the electronic device may determine whether to include the corresponding sound output device in the sound visualization data through a user input identified through the object representing the sound output device displayed on the user interface 500. For example, if the user does not want to use the sound output device disposed on the ceiling, the sound output device disposed on the ceiling may not need to be included in the sound visualization data. In this case, the electronic device may identify a user input (e.g., tap) through the object 509, 510, 511, 512, which is an object representing the sound output device disposed on the ceiling, and accordingly, include only the remaining sound output devices except for the sound output devices corresponding to the object 509, 510, 511, 512 among the plurality of sound output devices included in the sound system, in the sound visualization data.

According to an embodiment, in operation 340, the electronic device may obtain information about the plurality of sound output devices included in the sound system.

In an embodiment, the information about the plurality of sound output devices may include information (positions where they are placed) about the positions of the plurality of sound output devices, information about the shape (e.g., outer shape (slim type, stand type, circular type, etc.)) of the plurality of sound output devices, and/or information about the performance (e.g., output level, outputable frequency band, etc.) of the plurality of sound output devices.

In an embodiment, in response to identifying the second user input through the user interface 500, the electronic device may identify one or more sound output devices among the plurality of sound output devices and obtain output information about the one or more sound output devices.

In an embodiment, when one or more sound output devices are identified from the plurality of sound output devices through the user interface 500, the electronic device may obtain information about the one or more sound output devices. For example, if a user input for using two channels is identified through the user interface, the electronic device may only obtain information about the sound output devices corresponding to L and R.

According to an embodiment, in operation 350, the electronic device may decode content data based on information about the plurality of sound output devices to obtain pulse code modulation (PCM) data of the plurality of sound output devices. When the electronic device decodes the content data, PCM data may be obtained for each sound output device included in the sound system set in the electronic device. The PCM data may be output differently according to the original audio data and sound setting (i.e., the sound output device to be used) of the content data. For example, if the electronic device sets the configuration of the sound output device in the decoder of the electronic device (e.g., 2ch, 5.1ch, 5.1.2ch, 7.1.4ch, etc.), audio data may be generated differently according to the number and positions of the set sound output devices, and accordingly, audio data that may be output from each sound output device may be obtained as PCM data.

According to an embodiment, in operation 360, the electronic device may generate output information about the plurality of sound output devices based on PCM data of the plurality of sound output devices.

In an embodiment, the output information about the plurality of sound output devices may include information about the output intensity and/or information about output frequency bands of the plurality of sound output devices. For example, the electronic device may obtain information about the presence or absence of sound of sound for each sound output device, sound magnitude, and sound magnitude for each frequency band (e.g., treble, mid-range, and bass) based on the PCM data. For example, the output information about the plurality of sound output devices may have a form as illustrated in Table 1.

**[Table 1]**

| sound output device | L | R | C | LFE | Ls | Rs | Lrs | Rrs | Ltf | Rtf | Ltr | Rtr |
|---|---|---|---|---|---|---|---|---|---|---|---|---|
| all levels | 55 | 60 | 0 | 40 | 30 | 33 | 25 | 25 | 40 | 70 | 5 | 5 |
| treble level | 20 | 13 | 0 | 0 | 0 | 3 | 5 | 5 | 20 | 30 | 0 | 0 |
| mid-range level | 30 | 40 | 0 | 10 | 25 | 25 | 20 | 20 | 20 | 20 | 5 | 5 |
| bass level | 5 | 7 | 0 | 30 | 5 | 5 | 0 | 0 | 0 | 20 | 0 | 0 |

In Table 1, L, R, C, LFE, Ls, Rs, Lrs, Rrs, Ltf, Rtf, Ltr, and Rtr may include the respective sound output devices described above with respect to FIG. 5. '

In an embodiment, the output information about the speaker included in the electronic device may have a form as shown in Table 2 below.

**[Table 2]**

| TV speaker | Bottom L | Bottom R | Side L | Side R | Top L | Top R |
|---|---|---|---|---|---|---|
| all levels | 44 | 45 | 21 | 22 | 60 | 60 |
| treble level | 20 | 20 | 5 | 5 | 40 | 40 |
| mid-range level | 20 | 20 | 14 | 15 | 20 | 20 |
| bass level | 4 | 5 | 2 | 2 | 0 | 0 |

In Table 1, Bottom L may represent the sound output device corresponding to the object 518 of FIG. 5, Bottom R may represent the sound output device corresponding to the object 519, Side L may represent the sound output device corresponding to the object 516, Side R may represent the sound output device corresponding to the object 517, Top L may represent the sound output device corresponding to the object 514, and Top R may represent the sound output device corresponding to the object 515. According to an embodiment, in operation 370, the electronic device may generate visualization data for content data based on information about the plurality of sound output devices and output information about the plurality of sound output devices.

In an embodiment, the sound visualization data may include information 630 for visually showing the sound output content of the reproduced content data.

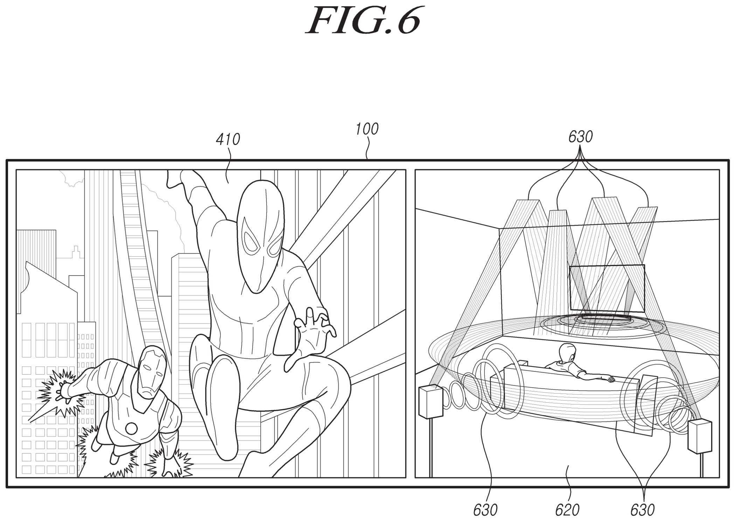

According to an embodiment, in operation 380, the electronic device may display a screen based on content data and sound visualization data. Hereinafter, an example of screen display based on sound visualization data is described with reference to FIG. 6. FIG. 6 illustrates an example screen displayed on an electronic device according to an embodiment.

In an embodiment, the screen displayed by the electronic device may include a first image 410 representing an image displayed based on content data and a second image 620 representing an image displayed based on sound visualization data.

In an embodiment, the first image 410 and the second image 620 may be displayed together on one screen. For example, as illustrated in FIG. 6, the first image and the second image may be displayed side by side on the left and right sides. The shape of the screen illustrated in FIG. 6 is merely an example, and the ratio between the areas in which the first image and the second image are displayed may be different. The ratio of the first area in which the first image is displayed and the second area in which the second image is displayed may be different.

In an embodiment, the sound visualization data may include information about the magnitude of the sound output from the sound output device. For example, referring to FIG. 6, the information about the magnitude of sound output from each sound output device may be displayed in the form of circular rings that increase in size sequentially. For a sound output device with a larger sound magnitude, a greater number of circular rings may be provided, whereas a device with a smaller sound magnitude may have fewer circular rings.

In an embodiment, the sound visualization data may include information about the frequency band of the sound output from the sound output device. For example, although not illustrated in the drawings, the frequency band of the sound may be displayed by varying colors, shades, patterns, etc. for each frequency band. For instance, a sound output device that outputs sound in a high-frequency band may be represented with a darker color compared to a device that outputs sound in a low-frequency band.

In an embodiment, the sound visualization data may include direction, distance, and echo information output from the sound output device. For example, referring to FIG. 6, the direction in which the sound output from the sound output device is output may be displayed on the second image. For example, when the sound output from the sound output device forms a beam, the output sound may be displayed in the form of a beam. For example, when the sound output from the sound output device is reflected by a ceiling or wall, it may be shown as reflected and bent.

In an embodiment, the electronic device may arrange the sound output device in a virtual space based on layout information about the sound output device included in the information about the plurality of sound output devices.

In an embodiment, the electronic device may display the sound output device in the virtual space based on external shape information about the sound output device included in the information about the plurality of sound output devices.

In an embodiment, the electronic device may display sound output from the sound output device based on information about the performance of the sound output device included in the information about the plurality of sound output devices and output information about the plurality of sound output devices. The electronic device may display a visual effect on the sound heard at the user's position.

In an embodiment, although not illustrated in the drawings, the electronic device may obtain an image of the space by capturing the surrounding space of the electronic device through the camera. Further, the electronic device may use sensors to obtain position information (e.g., the information about the distance and direction to objects (e.g., sofas, walls, ceiling, furniture, etc.) adjacent to the electronic device).

In an embodiment, the electronic device may generate information about the virtual space to be displayed in the second image based on the information obtained through the camera and the sensor, and may arrange and render the plurality of sound output devices in the virtual space based on the information about the plurality of sound output devices.

In an embodiment, the electronic device may generate information about the virtual space to be displayed on the second image based on the information obtained through the camera and the sensor, and render the sound output form of the plurality of sound output devices in the virtual space based on the output information about the plurality of sound output devices.

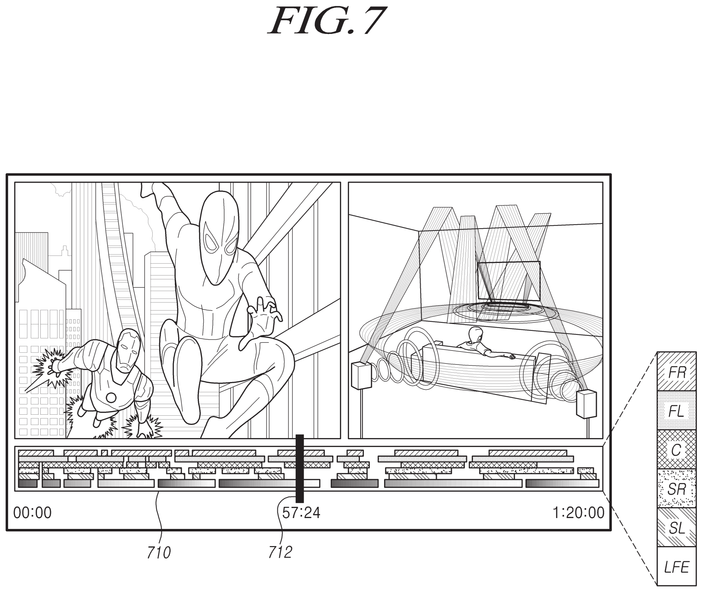

FIG. 7 illustrates an example screen displayed on an electronic device according to an embodiment. FIG. 7 relates to an example of displaying a reproduction bar for identifying an output state of a sound output device together with the first image and the second image.

In an embodiment, the electronic device may display information 710 about the sound state for each reproduction interval together with the first image displayed based on the content data and the second image displayed based on the sound visualization data.

In an embodiment, the information 710 about the sound state for each reproduction interval may include information about the sound output state for each sound output device. For example, referring to FIG. 7, the information 710 about the sound state for each reproduction interval may be displayed in the form of a bar, and each bar may be displayed through a different color or pattern. The object 712 may mean an object for indicating the interval currently being reproduced.

In an embodiment, the information 710 about the sound state for each reproduction interval may include information about whether a sound is currently being output for each sound output device. For example, at the current reproduction time point according to the object 712, the sound output device SL may indicate that sound is not being output, and the rest of the sound output devices may indicate that sound is being output.

In an embodiment, the information 710 about the sound state for each reproduction interval may include information about the magnitude of sound for each sound output device. For example, for the sound output device (LFE), the color of the bar at the time with a larger output level may be represented to have a darker color, and the color of the bar at the time with a smaller output level may be represented to have a lighter color.

In an embodiment, the number of bars displayed on 710 may vary according to the identified sound output device.

According to embodiments of the disclosure, a function for simultaneously visualizing the content currently being viewed by the user and the stereoscopic sound effect in real-time to know how the surround speaker is operating in a specific space may be provided. Accordingly, it is possible to allow a user without a surround audio environment to indirectly experience a sound output device by visualizing sound effects that change based on different surround audio environments and products during content reproduction, and to visually present a method for operating multiple speakers. It is also possible to receive information about the size or shape of the space where the user uses the TV and recommend a suitable surround audio environment or product for that space. A user situated in an actual speaker environment may more clearly recognize the stereophonic sound effect by implementing a function that identifies the stereophonic sound effect visually as well as auditorily. It is possible to facilitate the sound system settings in space through the first image display, which is based on content data, and the second image representing a corresponding sound effect therefor.

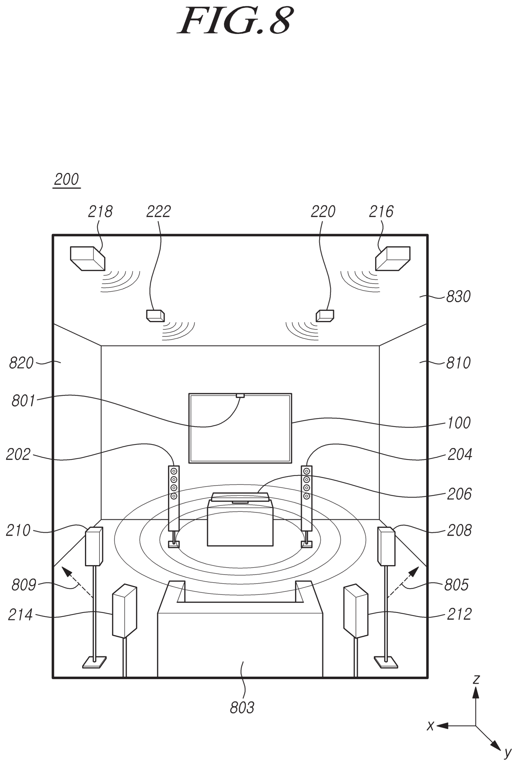

FIG. 8 illustrates an example of a screen proposing a layout structure of sound output devices by an electronic device according to an embodiment. The audio environment 200 illustrated in FIG. 8 may correspond to the audio environment 200 illustrated in FIG. 2.

The electronic device 100 according to embodiments of the disclosure may not only visually provide a sound output form of the plurality of sound output devices used by the electronic device 100 to output sound, but also provide an optimal sound output device layout structure for allowing the user to receive an optimal sound system.

Referring to FIG. 8, the electronic device 100 may capture the space adjacent to the electronic device 100 through the camera 801 included in the electronic device 100 to obtain information about the space adjacent to the electronic device 100. The electronic device 100 may obtain information about the space adjacent to the electronic device 100 from the image captured through the camera 801. The electronic device 100 may identify walls 810 and 820, a ceiling 830, and an object 803 adjacent to the electronic device 100 from the image captured through the camera 801. The object 803 may mean the object or the user disposed where the user listening to the sound output from the electronic device 100 is positioned.

In an embodiment, the electronic device 100 may identify the object placed at a specific position (e.g., center) of the obtained image as the object 803.

In an embodiment, the electronic device 100 may obtain a plurality of images through the camera 801 and identify the object 803 based on the plurality of images. For example, if there is a fixedly positioned object without changing its position in a plurality of images, the fixedly positioned object may be determined as the object 803.

In an embodiment, the electronic device 100 may obtain position information about the object 803, the adjacent walls 810 and 820, and the ceiling 830 identified through a distance sensor (not illustrated) included in the electronic device 100. For example, the electronic device 100 may obtain information about the distance between the object 803 and the electronic device 100 and information about the direction in which the object 803 is positioned. The electronic device 100 may identify an optimal sound output type based on the position information about the object 803.

In an embodiment, the electronic device 100 may determine the positions of the plurality of sound devices based on performance information about the plurality of sound devices. The electronic device 100 may identify a layout structure of a sound output device for providing an optimal sound output to the object 803 based on the position information about the object 803 and performance information about the plurality of sound output devices. For example, the electronic device may determine the recommended position of the sound output device with respect to the object 803 based on the performance information about the sound output device included in the sound system 422 selected by the user.

In an embodiment, the electronic device 100 may arrange the object corresponding to the sound output device at the recommended position. For example, the position of the sound output device 208 may be moved and displayed in the recommended direction 805. For example, the position of the sound output device 210 may be moved and displayed in the recommended direction 809.

The electronic device according to various embodiments of the disclosure may be one of various types of electronic devices. The electronic devices may include, for example, a display device, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. As used herein, the singular forms "a," "an," and "the" are intended to include the plural forms as well, unless the context clearly indicates otherwise. As used herein, the term 'and/or' should be understood as encompassing any and all possible combinations by one or more of the enumerated items. As used herein, the terms "include," "have," and "comprise" are used merely to designate the presence of the feature, component, part, or a combination thereof described herein, but use of the term does not exclude the likelihood of presence or adding one or more other features, components, parts, or combinations thereof. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1 st" and "2nd," or "first" and "second" may be used to simply distinguish a corresponding component from another, and does not limit the components in other aspect (e.g., importance or order).

As used herein, the term "part" or "module" may include a unit implemented in hardware, software, or firmware, and may interchangeably be used with other terms, for example, "logic," "logic block," "part," or "circuitry". A part or module may be a single integral component, or a minimum unit or part thereof, adapted to perform one or more functions. For example, according to an embodiment, 'part' or 'module' may be implemented in a form of an application-specific integrated circuit (ASIC).

As used in various embodiments of the disclosure, the term "if" may be interpreted as "when," "upon," "in response to determining," or "in response to detecting," depending on the context. Similarly, "if A is determined" or "if A is detected" may be interpreted as "upon determining A" or "in response to determining A", or "upon detecting A" or "in response to detecting A", depending on the context.

The program executed by the server device 200 described herein may be implemented as a hardware component, a software component, and/or a combination thereof. The program may be executed by any system capable of executing computer readable instructions.

The software may include computer programs, codes, instructions, or combinations of one or more thereof and may configure the processing device as it is operated as desired or may instruct the processing device individually or collectively. The software may be implemented as a computer program including instructions stored in computer-readable storage media. The computer-readable storage media may include, e.g., magnetic storage media (e.g., read-only memory (ROM), random-access memory (RAM), floppy disk, hard disk, etc.) and an optically readable media (e.g., CD-ROM or digital versatile disc (DVD). Further, the computer-readable storage media may be distributed to computer systems connected via a network, and computer-readable codes may be stored and executed in a distributed manner. The computer program may be distributed (e.g., downloaded or uploaded) via an application store (e.g., Play Store^{™}), directly between two UEs (e.g., smartphones), or online. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A method for operating an electronic device, the method comprising:
obtaining content data;
displaying a sound system list including at least one sound system available for the content data;
identifying a first sound system from the at least one sound system;
obtaining information about a plurality of sound output devices included in the first sound system;
obtaining pulse code modulation (PCM) data of the plurality of sound output devices by decoding the content data based on the information about the plurality of sound output devices;
generating output information about the plurality of sound output devices for the content data based on the PCM data of the plurality of sound output devices;
generating sound visualization data for the content data based on output information about the plurality of sound output devices and the information about the plurality of sound output devices; and
displaying a screen based on the content data and the sound visualization data,
wherein the information about the plurality of sound output devices includes information about positions of the plurality of sound output devices, information about shapes of the plurality of sound output devices, and information about performances of the plurality of sound output devices, and
wherein the output information about the plurality of sound output devices includes information about output intensities of the plurality of sound output devices and information about output frequency bands of the plurality of sound output devices.

2. The method of claim 1, wherein the displayed screen includes a first area where a first image corresponding to the content data is displayed and a second area where a second image corresponding to the sound visualization data is displayed.

3. The method of claim 1 or 2, further comprising:
generating a plurality of objects representing the plurality of sound output devices based on the information about the shapes of the plurality of sound output devices;
identifying positions where the plurality of objects representing the plurality of sound output devices are displayed based on the information about the positions of the plurality of sound output devices; and
displaying the plurality of objects representing the plurality of sound output devices to correspond to positions where the plurality of objects are displayed.

4. The method of any one of claims 1 to 3, further comprising:
obtaining information about a user's sound setting history;
determining a priority of the at least one sound system based on the information about the user's sound setting history; and
displaying the sound system list according to the determined priority,
wherein the information about the user's sound setting history includes information about a sound output device having a history of connecting to the electronic device a predetermined number of times or more, information about the user's preferred channel, or information about the user's preferred sound output device.

5. The method of any one of claims 1 to 4, further comprising:
identifying a first user input selecting the first sound system from among the at least one sound system;
displaying a user interface (UI) representing the plurality of sound output devices included in the first sound system based on identifying the first user input;
identifying a second user input selecting one or more sound output devices from among the plurality of sound output devices through the UI; and
obtaining output information about the plurality of sound output devices based on identifying the second user input.

6. The method of claim 2, further comprising:
displaying the first image based on obtaining the content data;
identifying a user input for displaying sound visualization information while displaying the first image; and
displaying the sound system list based on identifying the user input for displaying the sound visualization information.

7. The method of claim 2, further comprising:
displaying information about a sound state according to a playback interval of the content data.

8. The method of claim 7, wherein the information about the sound state according to the playback interval of the content data includes information about an output intensity of each of the plurality of sound output devices for each playback interval.

9. The method of any one of claims 1 to 8, further comprising:
obtaining virtual space information including information about a space adjacent to the electronic device; and
generating the sound visualization data based on the virtual space information.

10. The method of claim 9, further comprising:
obtaining echo information about the electronic device based on the virtual space information; and
generating the sound visualization data based on the echo information.

11. The method of any one of claims 1 to 10, wherein the sound visualization data includes an object indicating an output direction, and an object indicating an output intensity of a sound output from the plurality of sound output devices.

12. An electronic device comprising:
memory; and
at least one processor connected to the memory, wherein the at least one processor is configured to:
obtain content data;
control to display a sound system list including at least one sound system available for the content data;
identify a first sound system from the at least one sound system;
obtain information about a plurality of sound output devices included in the first sound system;
obtain pulse code modulation (PCM) data of the plurality of sound output devices by decoding the content data based on the information about the plurality of sound output devices;
generate output information about the plurality of sound output devices for the content data based on the PCM data of the plurality of sound output devices;
generate sound visualization data for the content data based on output information about the plurality of sound output devices and the information about the plurality of sound output devices; and
control to display a screen based on the content data and the sound visualization data,
wherein the information about the plurality of sound output devices includes information about positions of the plurality of sound output devices, information about shapes of the plurality of sound output devices, and information about performances of the plurality of sound output devices, and
wherein the output information about the plurality of sound output devices includes information about output intensities of the plurality of sound output devices and information about output frequency bands of the plurality of sound output devices.

13. The electronic device of claim 12, wherein the displayed screen includes a first area where a first image corresponding to the content data is displayed and a second area where a second image corresponding to the sound visualization data is displayed.

14. The electronic device of claim 12 or 13, wherein the at least one processor is configured to:
generate a plurality of objects representing the plurality of sound output devices based on the information about the shapes of the plurality of sound output devices;
identify positions where the plurality of objects representing the plurality of sound output devices are displayed based on the information about the positions of the plurality of sound output devices; and
control to display the plurality of objects representing the plurality of sound output devices to correspond to the positions where the plurality of objects are displayed.

15. The electronic device of any one of claims 12 to 14, wherein the at least one processor is configured to:
obtain information about a user's sound setting history;
determine a priority of the at least one sound system based on the information about the user's sound setting history; and
control to display the sound system list according to the determined priority,
wherein the information about the user's sound setting history includes information about a sound output device having a history of connecting to the electronic device a predetermined number of times or more, information about the user's preferred channel, or information about the user's preferred sound output device.
